# EUROPEAN PATENT SPECIFICATION

(11) **EP 1 657 436 B1**
(45) Date of publication and mention of the grant of the patent: **19.04.2017**
(21) Application number: 05021647.2
(22) Date of filing: 04.10.2005
(51) Int. Cl.: F02N 11/08, F02D 41/02, F02D 41/06, B60W 10/06, B60W 30/18, F02D 41/24

(54) **Vehicle control device**
Steuerungsvorrichtung für Kraftfahrzeuge
Appareil de commande pour véhicule

(30) Priority: 10.11.2004 JP 2004326865
(43) Date of publication of application: 17.05.2006
(73) Proprietor: TOYOTA JIDOSHA KABUSHIKI KAISHA, Toyota-shi, Aichi-ken, 471-8571 (JP)
(72) Inventor: Taki, Nobuyuki, Toyota Jidosha K.K., Toyota-shi Aichi-ken 471-8571 (JP)
(74) Representative: TBK

(56) References cited:
- EP-A2- 1 541 864
- DE-C1- 10 211 461
- US-A- 4 510 396
- US-A1- 2005 143 901

## Description

### BACKGROUND OF THE INVENTION

### Field of the Invention

The present invention relates to a control device that temporarily stops an engine if a predetermined condition is satisfied during idling, and particularly; to a control device that allows the condition to suit the driver's preference.

### Description of the Background Art

From the viewpoint of global warming prevention and resource saving, an idling stop system (which is also referred to as an economy running system or an engine automatic stop-start system, and hereinafter may be referred to as an eco run system) has been in practical use. The idling stop system automatically stops an engine when a vehicle stops at a red light at an intersection or the like, and restarts the engine when a driver performs an manipulation to restart driving (for example, presses an accelerator pedal, stops pressing a brake pedal, or moves a shift lever to a forward driving position). When the engine is to be restarted, the system uses power from a secondary battery mounted on the vehicle to rotate a crankshaft by means of an electric motor such as a motor generator or a starter motor to restart the engine.

Such an eco run system is required to detect various sensor signals and switch signals, stop an engine if a predetermined condition for starting eco run is satisfied, and control the engine for restart. However, if a condition for starting eco run is uniquely set, the driver, who has an acquired habit of driving, may encounter the operation that does not suit his/her preference, which inevitably causes a sense of discomfort when he/she manipulates the vehicle.

Japanese Patent Laying-Open No. 2004-169588 discloses an engine stop-start device capable of solving such a problem. The engine stop-start device is a device for stopping an engine under a prescribed condition and restarting the engine under a prescribed condition after the engine-stop, and includes a mode switching portion for switching an operation mode, a sensor selecting portion for determining whether a detecting sensor and a detecting switch exist or not, and a selecting portion for selecting a control program in accordance with the sensor selecting portion to select a plurality of operation modes. See as well DE 102 11 416 C1.

According to the engine stop-start device, particularly in a Manual Transmission (MT) vehicle, at least two modes can be selected from a mode (NT mode) in which an engine is automatically stopped when a clutch switch (a clutch SW) is off and the vehicle speed is zero or below a prescribed speed, and thereafter the engine is allowed to restart when a clutch is pressed, a mode (DT mode) in which the engine is stopped when a parking brake is applied when the vehicle speed is zero or below a prescribed speed, and the engine is allowed to restart when the parking brake is released, and a mode (BT mode) in which the engine is stopped when a stop switch (a stop SW) is on, and the engine is allowed to restart when a start switch (a start SW) is on. Accordingly, a driver can select a mode that suits his/her preference to eliminate a sense of discomfort.

However, in the engine stop-start device disclosed in Japanese-Patent Laying Open No. 2004-169588, a driver himself/herself has to operate the mode that suits his/her preference, which means that the driver is required to perform a manipulation to select the mode that suits his/her preference whenever he/she drives another vehicle. Furthermore, if the driver's preference does not suit any of the three modes that have been set, the driver is inevitably required to select the mode closest to his/her preference. This cannot be a solution to the problem associated with the fact that the driver feels a sense of discomfort if he/she encounters the operation that does not suit his/her preference in manipulating the vehicle.

### SUMMARY OF THE INVENTION

The present invention is made to solve the problems above. An object of the present invention is to, with respect to a vehicle on which a system for temporarily stopping an engine if a state of the vehicle satisfies a predetermined condition and thereafter restarting the engine is mounted, provide a vehicle control device capable of automatically setting a condition that suits a driver's preference.

A vehicle control device according to the present invention controls a vehicle having an idling stop system mounted thereon for temporarily stopping an engine if a state of the vehicle satisfies a predetermined condition. This control device includes a detecting portion for detecting the state of the vehicle when the vehicle is temporarily stopped, and a setting portion for setting the predetermined condition based on the detected state of the vehicle.

According to the present invention, the setting portion automatically sets a condition for temporarily stopping the engine. The setting portion detects a state of the vehicle when the vehicle is temporarily stopped, and sets a condition for temporarily stopping the engine based on the state of the vehicle. Manners in which a vehicle is temporarily stopped at a red light, for example, vary depending on drivers: in the case of an MT vehicle, there are drivers who stop a vehicle by continuously pressing a clutch pedal, drivers who stop a vehicle by shifting a transmission to a neutral position, drivers who stop a vehicle by shifting a transmission to a neutral position and continuously pressing a foot brake, or drivers who stop a vehicle by shifting a transmission to a neutral position and applying a side brake. In the case of an Automatic Transmission (AT), there are drivers who stop a vehicle by shifting a transmission to a neutral position, drivers who stop a vehicle by keeping a transmission in a forward driving position and continuously pressing a foot brake, drivers who stop a vehicle by keeping a transmission in a forward driving position and applying a side brake, or other drivers. The setting portion detects a state of the vehicle (a speed of the vehicle, a state of the brake, a state of the transmission, a state of the clutch, a state of a road surface on which the vehicle is stopped, and a state of a steering wheel of the vehicle) when the vehicle has been stopped in a continuous manner for at least a predetermined period of time for the first time after an ignition switch was turned on, so that the state is set as an engine stopping condition. At this time, since the driver has stopped the vehicle in a continuous manner, it can be determined that the driver intends to stop the engine. As a result, in a vehicle on which a system for temporarily stopping an engine if a state of the vehicle satisfies a predetermined condition and thereafter restarting the engine is mounted, it is possible to provide a vehicle control device capable of automatically setting a condition that suits the driver's preference.

Preferably, the vehicle control device sets an engine restarting condition corresponding to the predetermined condition.

According to the present invention, if a state in which a clutch pedal is pressed and the clutch is brought into a power non-transmission state is set as an engine stopping condition in an MT vehicle, for example, then a state in which the clutch pedal is ceased to be pressed and the clutch is brought into a power transmission state can be set as an engine restarting condition.

The detecting portion detects the state of the vehicle when the vehicle has temporarily been stopped in a continuous manner for a predetermined period of time for the first time after a driver performed a manipulation to start the engine.

According to the present invention, when the vehicle has been stopped for at least a predetermined period of time for the first time after an ignition switch was turned on, the setting portion allows the detected state of the vehicle to be set as an engine stopping condition. At this time, since the driver has stopped the vehicle in a continuous manner, it can be determined that the driver intends to stop the engine. Even if a plurality of drivers share the same vehicle, it is possible to automatically set an engine stopping condition in accordance with a preference of each of the drivers.

The state of the vehicle includes a speed of the vehicle, a state of a brake, a state of a transmission, a state of a clutch, a state of a road surface on which the vehicle is stopped, and a state of a steering wheel of the vehicle. The setting portion sets the predetermined condition by modifying a plurality of items representative of the state of the vehicle.

According to the present invention, it is possible to set an engine stopping condition that suits a driver's preference by modifying items that are selected from a plurality of items representative of a state of the vehicle to constitute the condition, in accordance with a preference of each of the drivers and the like.

More preferably, the predetermined condition is a condition using a threshold value with respect to a physical quantity representative of the state of the vehicle. The setting portion sets the predetermined condition by modifying the threshold value.

According to the present invention, it is possible to set an engine stopping condition that suits the driver's preference by modifying a threshold value with respect to a physical quantity (for example, master brake cylinder pressure) representative of a state of the vehicle such that the threshold value is increased or decreased, for example, in accordance with each of the drivers.

More preferably, the setting portion sets the predetermined condition to suit a preference of the driver based on the detected state of the vehicle.

According to the present invention, it is possible to set an engine stopping condition and an engine restarting condition that suit the driver's preference.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a control block diagram showing an eco run system according to an embodiment of the present invention.
Fig. 2 is a flowchart showing a control structure of a program executed in an eco run ECU in Fig. 1.

### DESCRIPTION OF THE PREFERRED EMBODIMENTS

An embodiment of the present invention will now be described with reference to the drawings. In the description below, similar parts are denoted by the same reference characters, and have the same names and functions. Accordingly, the detailed description thereof will not be repeated.

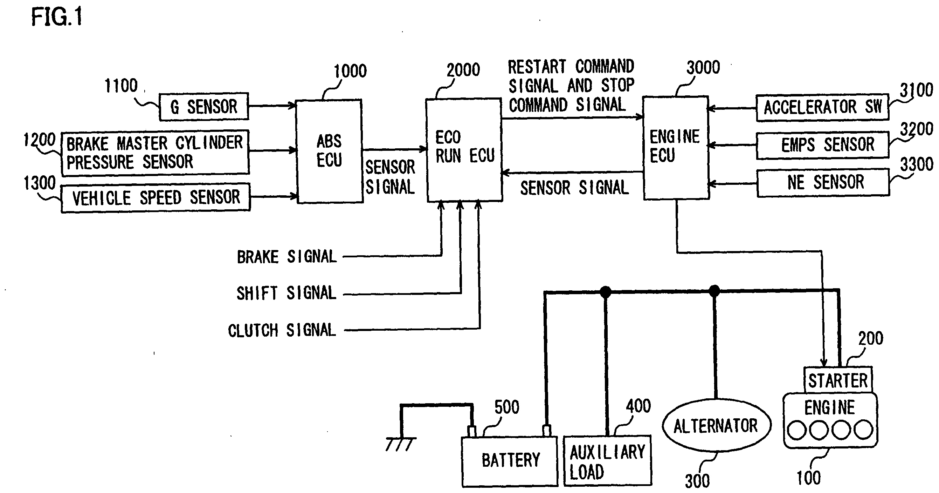

Referring to Fig. 1, a control block of the eco run system according to the embodiment of the present invention will now be described. In the following, a vehicle on which the eco run system is to be mounted is described to have a manual transmission (MT). However, this does not mean that an AT vehicle is actively excluded from the vehicles to which the present invention is to be applied.

The eco run system includes, as a hardware system to be controlled, an engine 100, a starter 200 for cranking engine 100 to start and restart engine 100 (to start the operation of engine 100 with an ignition switch is referred to as start, and to start the operation of engine 100 after the temporary stop by eco run is referred to as restart), an alternator 300 connected to a crankshaft pulley of engine 100 by a belt, an auxiliary load 400 such as a compressor of a light, an audio unit, or an air conditioner, a battery (secondary battery) 500 for supplying power to starter 200 and auxiliary load 400. Starter 200 may be replaced with a motor generator, and the battery may further have a battery mounted thereon for supplying power when engine 100 is stopped.

The eco run system includes, as a control system for controlling such a hardware system, an Antilock braking System (ABS)_Electronic Control Unit (ECU) 1000, an eco run ECU 2000, and an engine ECU 3000.

A signal from a G sensor 1100 (a signal of a physical quantity representative of a tilt and an acceleration of the vehicle), a signal from a brake master cylinder pressure sensor 1200 (a signal of a physical quantity representative of how effectively a breaking device of the vehicle operates), and a signal from a vehicle speed sensor 1300 (a signal of a physical quantity representative of a speed of the vehicle) are independently input into ABS_ECU 1000.

A brake signal indicating that a brake operating in conjunction with a brake lamp signal is in an operation state, a shift signal indicating a shift position of the transmission, and a clutch signal indicating an operation state of the clutch are independently input into eco run ECU 2000.

A signal from an accelerator switch 3100 detecting that an accelerator pedal is pressed, a signal from an Electronic Motor Power Steering (EMPS) sensor 3200 detecting that a steering is manipulated, and a signal from a number of revolutions (NE) sensor 3300 detecting an NE of engine 100 are independently input into engine ECU 3000.

Further, a sensor signal is sent from ABS_ECU 1000 to eco run ECU 2000, from which a start command signal and a stop command signal for engine 100 are sent to engine ECU 3000, from which a sensor signal is sent to eco run ECU 2000. Engine ECU 3000 sends a start signal to starter 200 based on the start command signal for engine 100 received from eco run ECU 2000. Starter 200 in turn cranks engine 100 to restart engine 100.

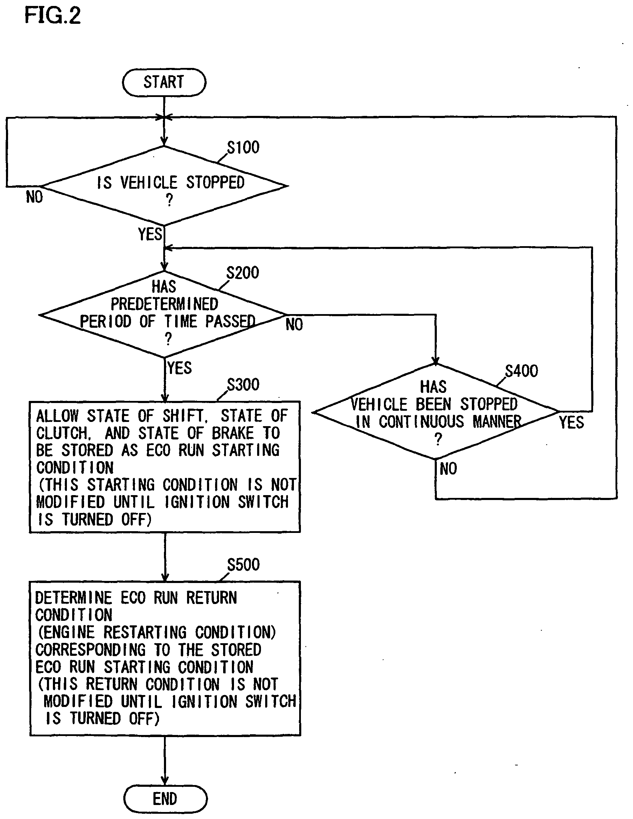

Referring to Fig. 2, a flowchart showing a control structure of a program executed in the eco run ECU in Fig. 1 will be described.

In step (hereinafter abbreviated as S) 100, eco run ECU 2000 detects whether the vehicle is stopped or not. At this time, eco run ECU 2000 detects whether the vehicle is stopped or not by a signal input thereinto from vehicle speed sensor 1300 through ABS_ECU 1000. If the vehicle is stopped (YES in S100), the process proceeds to S200. If not so (NO in S100), the process returns to S100.

In S200, eco run ECU 2000 determines whether a predetermined period of time has passed or not since the vehicle was stopped. If a predetermined period of time has passed since the vehicle was stopped (YES in S200), the process proceeds to S300. If not so (NO in S200), the process proceeds to S400.

In S300, eco run ECU 2000 allows a state of the shift position of the transmission, a state of the clutch, and a state of the brake to be set as an eco run starting condition and stores the same. This eco run starting condition is not modified until an ignition switch is turned off.

In S400, eco run ECU 2000 determines whether the vehicle has been stopped or not in a continuous manner. If the vehicle has been stopped in a continuous manner (YES in S400), the process proceeds to S200. If not so (NO in S400), the process returns to S100.

In S500, eco run ECU 2000 determines an eco run return condition (a condition for restarting engine 100) corresponding to the stored eco run starting condition and stores the same. This eco run return condition is not modified until the ignition switch is turned off.

An operation of the eco run system based on the above-described structure and the flowchart will now be described.

Assume that the state in which "the shift position is in a neutral position, the clutch is in a power transmission state, and the brake is in a non-operation state" is stored as an eco run starting condition. Under the circumstances, when a new driver having a preference that does not suit such a condition sits in the vehicle and turns the ignition switch on, engine 100 is started.

If the new driver temporarily stops the vehicle at a red light, for example, after sitting in the vehicle and starting engine 100 (YES in S100), and the state in which the vehicle is stopped continues for a predetermined period of time (YES in S200 and YES in S400), then a state of the shift position, a state of the clutch, and a state of the brake at that time are stored as an eco run starting condition. For example, if the new driver has stopped the vehicle for at least a predetermined period of time in the state in which "the shift position is in a forward driving position, the clutch is in a power non-transmission state, and the brake is in a non-operation state", this state is stored as a new eco run starting condition. In other words, since the driver has stopped the vehicle in a continuous manner for at least a predetermined period of time, the system considers that if the system temporarily stops engine 100, the driver does not intend to start the vehicle immediately. Therefore, even if the system temporarily stops engine 100, the driver does not feel a sense of discomfort, which establishes an eco run starting condition that suits the driver's intention. For example, if the previously stored eco run condition that "the shift position is in a neutral position, the clutch is in a power transmission state, and the brake is in a non-operation state" is maintained, and the new driver does not change the shift position into a neutral position even when he/she is to stop the vehicle at a red light for a relatively long period of time, then the system does not temporarily stop engine 100 and fails to exhibit the effect of eco run. In contrast, if a new eco run starting condition is stored, and the new driver is to stop the vehicle for a relatively long period of time, then the system temporarily stops engine 100 and can exhibit the effect of eco run.

If the vehicle ceases to be stopped before the completion of the predetermined period of time that started when the vehicle was stopped (NO in S200 and NO in S400), then a new eco run starting condition is not stored because the period of time for which the driver has stopped the vehicle is not so long as the predetermined period of time, based on which engine 100 is stopped.

An eco run return condition corresponding to the stored eco run starting condition is determined and stored (S500). At this time, in the case of the new driver, an eco run starting condition is that "the shift position is in a forward driving position, the clutch is in a power non-transmission state, and the brake is in a non-operation state". Therefore, a state in which "the clutch is in a power transmission state" is determined as a new eco run return condition.

For these conditions, if the eco run starting condition is that "the clutch is in a power non-transmission state", a state in which "the clutch is in a power transmission state" is set as an eco run return condition. If the eco run starting condition is that "the shift position is in a neutral position", a state in which "the shift position is in the first state" is set as an eco run return condition. If the eco run starting condition is that "the brake is in an operation state", a state in which "the brake is in a non-operation state" is set as an eco run return condition. By making an eco run starting condition correspond to an eco run return condition, as described above, these conditions can be suited to a manipulation for restarting the typical vehicles. Note that the relation between the conditions is not limited thereto The eco run starting condition and the eco run return condition are not modified until the ignition switch is turned off, which indicates the possibility of a driver's change.

As described above, according to the eco run system of the present embodiment, a condition for temporarily stopping an engine is automatically set by the eco run ECU. The eco run ECU detects a state of the vehicle when the vehicle is temporarily stopped for the first time after the engine was started by a manipulation of the ignition switch, and sets an eco run starting condition based on the state of the vehicle. Even if the manners in which the vehicle is temporarily stopped vary depending on drivers, the eco run ECU allows the state of the vehicle to be set as an eco run starting condition. Since the driver has stopped the vehicle in a continuous manner, it can be determined that the driver intends to stop the engine. Therefore, this eco run starting condition suits the driver's preference.

An item of the eco run starting condition or the eco run return condition may be modified, or a threshold value with respect to a physical quantity representative of each state included in the condition may be modified, to suit the driver's preference. For example, this means that a master brake cylinder pressure, by which it is determined that a brake is in operation, is modified.

Furthermore, the eco run starting condition and the eco run return condition may be set by using a G sensor to consider a tilt of a road surface on which the vehicle is stopped. In addition, the eco run starting condition and the eco run return condition may be set by using an EMPS sensor to consider the state of a steering wheel of the vehicle.

Although the present invention has been described and illustrated in detail, it is clearly understood that the same is by way of illustration and example only and is not to be taken by way of limitation, the scope of the present invention being limited only by the terms of the appended claims.

## Claims

1. A vehicle control device (2000) controlling a vehicle having an idling stop system mounted thereon for temporarily stopping an engine (100) if a state of the vehicle satisfies a predetermined condition, comprising:
setting means for setting said predetermined condition;
detecting means (1100, 1200, 1300, 3200) for detecting the state of the vehicle when said vehicle is temporarily stopped;
wherein said state of the vehicle includes at least one of a state in which a brake is or is not in an operation state, a state in which a transmission is or is not in a neutral position and a state in which a clutch is or is not in a power transmission state;
**characterized by**
said detecting means (1100, 1200, 1300, 3200) comprising means being adapted to detect the state of the vehicle when said vehicle has temporarily been stopped in a continuous manner for a predetermined period of time for the first time after a driver performed a manipulation to start said engine (100); and
said setting means being adapted to set said predetermined condition based on said detected state of the vehicle.

2. The vehicle control device according to claim 1, **characterized by** further comprising means for setting a condition for restarting said engine (100), said condition for restarting said engine (100) corresponding to said predetermined condition.

## Patentansprüche

1. Fahrzeugsteuerungsvorrichtung (2000), zur Steuerung eines Fahrzeuges mit einem daran angebrachten Leerlaufstoppsystem zum zeitweiligen Stoppen einer Maschine (100), falls ein Fahrzeugzustand eine vorbestimmte Bedingung erfüllt, die Vorrichtung umfasst dabei:
eine Einstellungseinrichtung zum Einstellen der vorbestimmten Bedingung;
eine Erfassungseinrichtung (1100, 1200, 1300, 3200) zum Erfassen des Fahrzeugzustandes, wenn das Fahrzeug zeitweilig gestoppt ist;
wobei der Fahrzeugzustand zumindest einen Zustand, bei dem sich eine Bremse in einem Betriebszustand befindet oder nicht, einen Zustand, bei dem sich ein Getriebe in einer neutralen Position befindet oder nicht, oder einen Zustand, bei dem sich eine Kupplung in einem Leistungsübertragungszustand befindet oder nicht, umfasst;
**dadurch gekennzeichnet, dass**
die Erfassungseinrichtung (1100, 1200, 1300, 3200) eine Einrichtung umfasst, die zum Erfassen des Fahrzeugzustandes eingerichtet ist, wenn das Fahrzeug in einer kontinuierlichen Weise für eine vorbestimmte Zeitdauer zum ersten Mal nach der Durchführung einer Beeinflussung durch einen Fahrer zum Starten der Maschine (100) zeitweilig gestoppt worden ist; und
die Einstellungseinrichtung dazu eingerichtet ist, die vorbestimmte Bedingung auf der Grundlage des erfassten Fahrzeugzustandes einzustellen.

2. Fahrzeugsteuerungsvorrichtung nach Anspruch 1, ferner **gekennzeichnet durch** eine Einrichtung zum Einstellen einer Bedingung zum Neustarten der Maschine (100), wobei die Bedingung zum Neustarten der Maschine (100) der vorbestimmten Bedingung entspricht.

## Revendications

1. Appareil de commande pour véhicule (2000) pour commander un véhicule ayant un système d'arrêt au ralenti monté sur celui-ci pour arrêter temporairement un moteur (100) si un état du véhicule satisfait une condition prédéterminée, comprenant :
des moyens de réglage pour régler ladite condition prédéterminée ;
des moyens de détection (1100, 1200, 1300, 3200) pour détecter l'état du véhicule quand ledit véhicule est arrêté temporairement ;
dans lequel ledit état du véhicule inclut au moins un d'un état dans lequel un frein est ou n'est pas dans un état de fonctionnement, un état dans lequel une transmission est ou n'est pas au point mort et un état dans lequel un embrayage est ou n'est pas dans un état de transmission d'énergie ;
**caractérisé en ce que**
lesdits moyens de détection (1100, 1200, 1300, 3200) comprenant des moyens étant adaptés à détecter l'état du véhicule quand ledit véhicule a été temporairement arrêté de manière continue pour une période de temps prédéterminée pour la première fois après qu'un conducteur a réalisé une manipulation pour démarrer ledit moteur (100) ; et
lesdits moyens de réglage étant adaptés à régler ladite condition prédéterminée sur la base dudit état détecté du véhicule.

2. Appareil de commande pour véhicule selon la revendication 1, **caractérisé par le fait qu'**il comprend en outre des moyens pour régler une condition pour redémarrer ledit moteur (100), ladite condition pour redémarrer ledit moteur (100) correspondant à ladite condition prédéterminée.
